# EUROPÄISCHE PATENTSCHRIFT

(11) **EP 0 580 918 B1**
(45) Veröffentlichungstag und Bekanntmachung des Hinweises auf die Patenterteilung: **13.12.1995**
(21) Anmeldenummer: 92810572.5
(22) Anmeldetag: 27.07.1992
(51) Int. Cl.: H01M 8/24, H01M 8/04, H01M 8/12

(54) **Vorrichtung mit Hochtemperatur-Brennstoffzellen**
Device comprising high-temperature fuel cells
Dispositif comportant des piles à combustible fonctionnant à haute température

(43) Veröffentlichungstag der Anmeldung: 02.02.1994
(73) Patentinhaber: SULZER INNOTEC AG, CH-8401 Winterthur (CH)
(72) Erfinder: Diethelm, Roland, CH-8494 Bauma (CH); Kruschwitz, Roman, CH-8332 Russikon (CH)
(74) Vertreter: Heubeck, Bernhard

(56) Entgegenhaltungen:
- EP-A- 0 355 420
- EP-A- 0 377 151
- EP-A- 0 437 175
- EP-A- 0 450 336
- EP-A- 0 490 808
- WO-A-86/06762
- US-A- 3 377 203
- US-A- 3 485 676
- PATENT ABSTRACTS OF JAPAN vol. 12, no. 385 (E-668)(3232) 14. Oktober 1988 and JP-A-63 128 559
- PATENT ABSTRACTS OF JAPAN vol. 12, no. 174 (E-612)(3021) 24. Mai 1988 and JP-A-62 283 570

## Beschreibung

Die Erfindung betrifft eine Vorrichtung gemäss Oberbegriff von Anspruch 1. Der Zellenstapel dieser Vorrichtung bildet eine Batterie von Feststoffelektrolyt-Brennstoffzellen, die in Serie geschalten sind. Die zentralsymmetrische Brennstoffzelle ist aus der EP-A-0 437 175 bekannt. Der in den scheibenförmigen elektrochemisch aktiven Elementen stattfindende Prozess, der die elektrische Energie der Brennstoffzellenbatterie liefert, läuft bei Temperaturen zwischen rund 850 und 900°C ab. Die niedrigere Temperatur liegt an der Peripherie der elektrochemisch aktiven Elemente vor, die höhere im Zentrum. Der gasförmige Brennstoff wird axial zugeführt. Die an der Peripherie der Zellen eingespeiste Luft, die zuvor in einem Wärmetauscher mittels des heissen Abgases erhitzt worden ist, gelangt zunächst durch einen radialen Spaltraum in die Zellenmitte, bevor sie mit den elektrochemisch aktiven Elementen in Kontakt kommt. Es ist vorgesehen, das Gas, das beim stromliefernden Prozess im Maximum zu etwa 85% nutzbar ist, in einem Nachverbrennungsraum an der zylindrischen Oberfläche des Zellenstapels mittels der Luft, die parallel mit dem Gas aus den Brennstoffzellen austritt, vollständig zu verbrennen. Bezüglich den erwähnten Betriebstemperaturen von 850/900°C ist zu erwarten, dass die Weiterentwicklung der elektrochemisch aktiven Elementen zu einer Erniedrigung dieser Temperatur auf um die 700°C führen wird.

Weitere Details, den Wärmehaushalt der Brennstoffzellen-Batterie betreffend, sind in der EP-A-0 473 540 beschrieben. Insbesondere wird dort zwischen einem externen und einem internen Rekuperator unterschieden. Der externe Rekuperator ist der oben erwähnte Abgaswärmetauscher. Der interne Rekuperator besteht aus einem plattenförmigen Temperaturausgleichskörper und Wärmetauscherelementen an der Peripherie der Brennstoffzelle. Dank dieses internen Rekuperators sind die in der Zelle auftretenden Temperaturgradienten vorteilhafterweise wesentlich kleiner als bei anderen bekannten Brennstoffzellen.

Da der stromliefernde Prozess der erfindungsgemässen Vorrichtung nur bei hohen Temperaturen abläuft, ist eine wärmedämmende Hülle notwendig, die den Wärmeverlust so weit einschränkt, dass die hohe Prozesstemperatur überhaupt realisierbar ist. Es ist Aufgabe der Erfindung, eine Hülle zu schaffen, bei der sich unter Verwendung von wenig wärmedämmendem Material ein möglichst geringer Wärmeverlust einstellt. Diese Aufgabe wird durch die kennzeichnenden Merkmale des ersten Anspruchs gelöst. Besondere Ausführungsformen der erfindungsgemässen Vorrichtung sind durch die abhängigen Ansprüche gekennzeichnet.

Statt dass die für den Prozess benötigte Luft zuerst in einem externen Rekuperator vorerhitzt wird, wird die Luft bei der erfindungsgemässen Vorrichtung als Wärmesenke verwendet, indem die aus dem Zellenstapel wegfliessende Wärme in der Hülle zumindest teilweise aufgefangen und wieder zum Reaktionsort zurückgeführt wird. Die Hülle übernimmt dabei neben ihrer wärmedämmenden Funktion die Rolle des externen Rekuperators.

Nachfolgend wird die Erfindung anhand von Zeichnungen erläutert. Es zeigen:
- Fig. 1: eine erfindungsgemässe Vorrichtung mit teilweise aufgeschnittener Hülle,
- Fig. 2: eine Seitenansicht der erfindungsgemässen Vorrichtung mit einem Ausschnitt des Längsschnitts,
- Fig. 3: einen ausschnittsweise gezeigten Querschnitt,
- Fig. 4: eine Darstellung wie in Fig.2 mit einer zweiten Ausführungsform der Hülle und
- Fig. 5: eine dritte Ausführungsform.

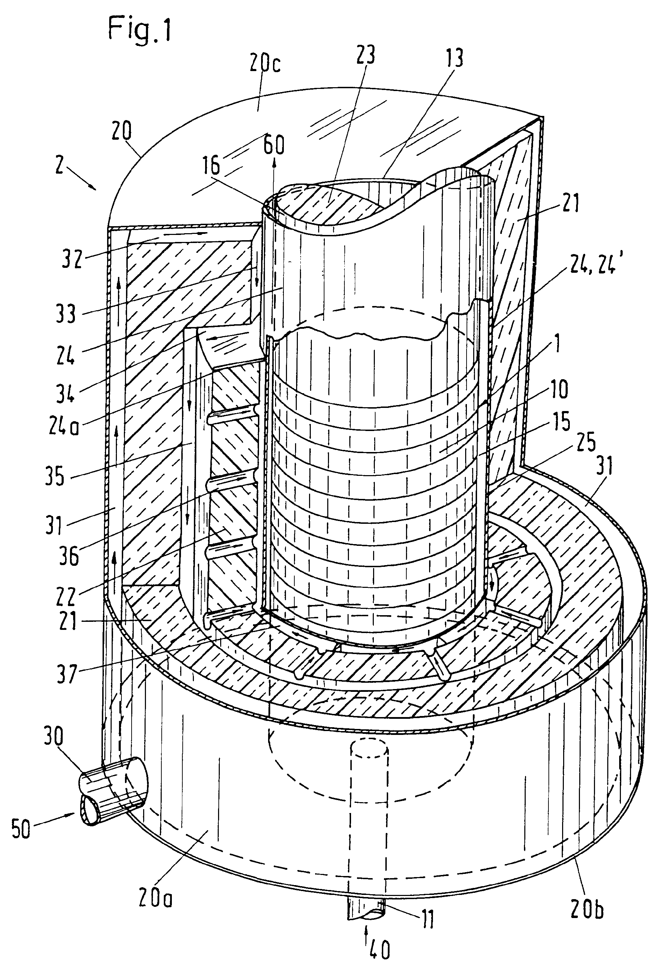

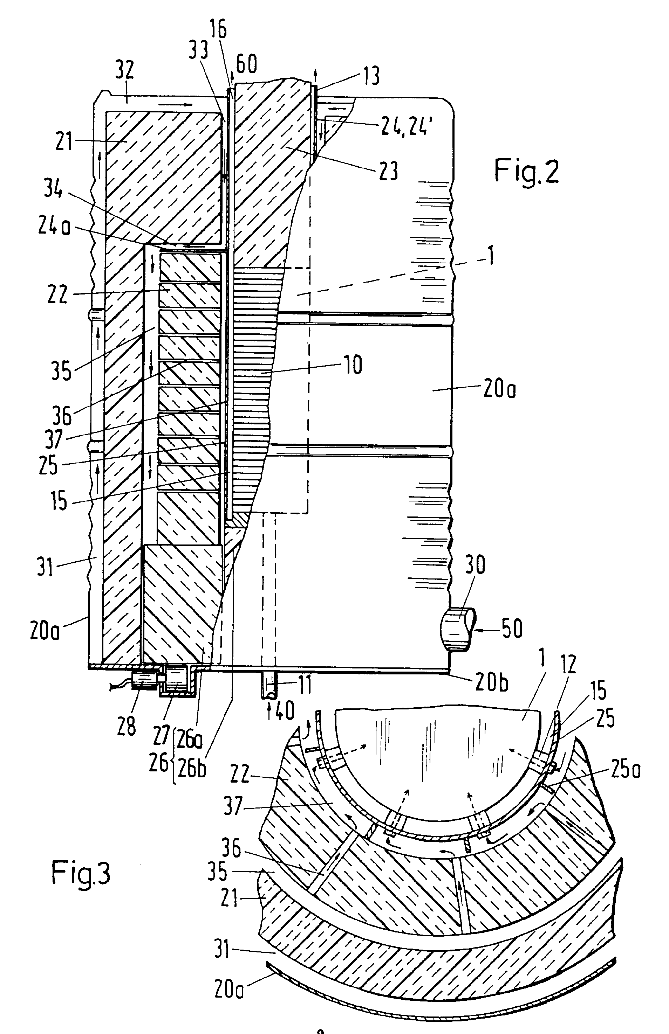

Die mehrschichtig ausgebildete Hülle 2 des Stapels 1 mit den Brennstoffzellen 10 in den Figuren 1, 2 und 3 weist folgende Bestandteile auf: eine äussere Hüllenwand 20 (= äussere Schicht) mit einer Mantelfläche 20a, einer Bodenplatte 20b und einer Deckfläche 20c; einen Luftzufuhrstutzen 30 für die Luft 50; ein erstes Mantelstück 21 und ein zweites Mantelstück 22 aus einem wärmedämmenden Material; einen Verdrängerkörper 23 im Abzug 13 des Abgases 60; eine wärmeübertragende Fläche 24 eines Abgaswärmetauschers 24′ und eine Heizfläche 25 eines Nachverbrennungsraums 15, welche beiden Flächen 24 und 25 Teilstücke eines axialen Rohres sind. Eine Bodenisolation 26, die sich aus zwei Teilen 26a und 26b zusammensetzt, ist in Fig.2 zu sehen.

Die Zufuhrstelle 11 für das Gas 40 befindet sich im Zentrum der Bodenplatte 20b. Das Kanalsystem der Hülle 2 für die Luft besteht aus folgenden Teilräumen: einem Ringspaltkanal 31, der zusammen mit dem radialen Spaltraum 32 einen ersten Hohlraum zwischen der äusseren Schicht 20 und den inneren Hüllenteilen bildet; einem Ringspaltkanal 33, welcher der Luftraum des Abgaswärmetauschers 24′ ist; einem zweiten radialen Spaltraum 34, durch den die Luft wieder gegen aussen zum Spalt 35 zwischen den beiden Mantelstücken 21 und 22 geleitet wird; radiale Luftkanäle 36 des Mantelstücks 22, die gleichmässig verteilt die Verbindung zwischen dem Spalt 35 und den axialen, entlang der Heizfläche 25 angeordneten Kanälen 37 herstellen. Die Kanäle 37 sind oben durch die radiale Wand 24a und seitlich durch die Lamellen oder Rippen 25a begrenzt.

Das erste Mantelstück 21 und die Bodenisolation 26 bilden zusammen eine im wesentlichen luftundurchlässige zweite Schicht der Hülle 2. Der Luftzufuhrstutzen 30 an der äusseren Hüllenwand 20 und die Übergangsstellen vom ersten Hohlraum 31, 32 zum inneren Kanalsystem 33-37 sind solcherart angeordnet, dass die zugeführte Luft 50 als Wärmesenke für die radial nach aussen fliessende Wärme wirkt. Die auf diese Weise abgefangene Wärme wird wieder zurück zum Zellenstapel 1 transportiert.

Der beim Abzug 13 für die heissen Abgase 60 in die Hülle 2 integrierte Gegenstrom-Wärmetauscher 24′, mittels welchem Abwärme an die im ersten Hohlraum 31, 32 vorgewärmte Luft übertragen wird, ist Teil des externen Rekuperators. Das Mantelstück 22 mit den radialen Kanälen 36 sowie die Heizfläche 25, an der eine weitere Erhitzung der Luft erfolgt, sind auch zum externen Rekuperator zu zählen. Die erfindungsgemässe Vorrichtung soll solcherart ausgelegt sein, dass im wesentlichen die im Nachverbrennungsraum 15 bei der Verbrennung freigesetzte Wärme durch die Heizfläche 25 an die Luft in den Kanälen 37 (über Wärmeleitung) und an das Mantelstück 22 (über Wärmestrahlung) abgegeben wird. Durch die Verbrennung soll es an der zylindrischen Stapeloberfläche dank der radialen Wärmeabführung nicht zu einer Erhöhung der Temperatur über die oben erwähnten rund 850°C kommen.

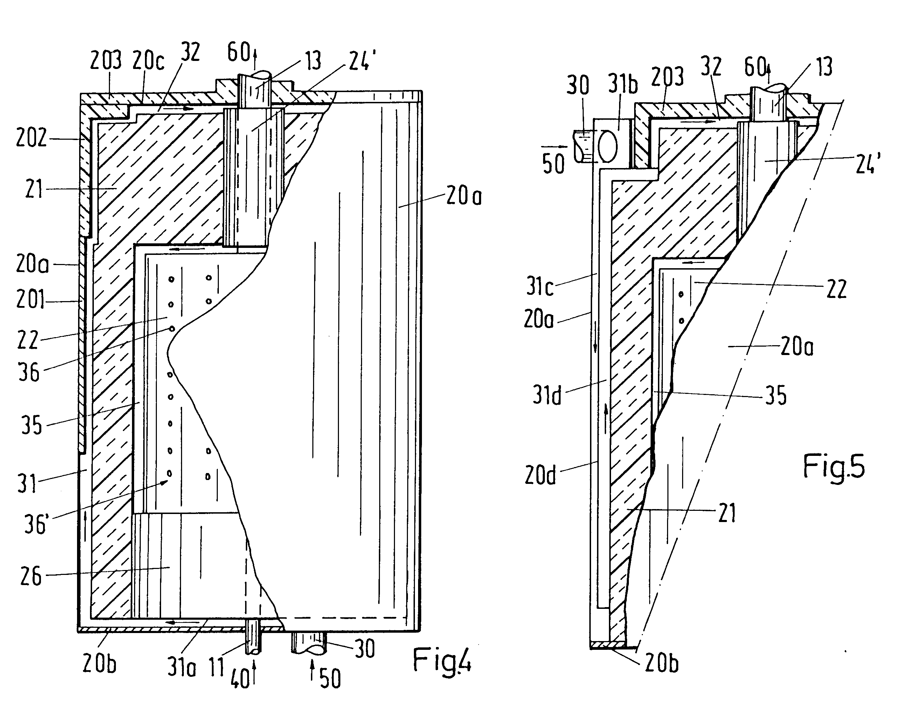

Der Abgaswärmetauscher 24′ kann - wie in Fig.1 oder Fig.2 dargestellt - einfach aus zwei ringraumförmigen Kanälen 33 und 16, die durch das wärmeübertragende Rohrstück 24 getrennt sind, aufgebaut sein. Dabei wird der Kanal 16 für das heisse Abgas 60 auf der Innenseite durch den Verdrängerkörper 23 begrenzt. Der Abgaswärmetauscher 24′ kann auch anders ausgebildet sein, beispielsweise wie es in Fig.4 oder Fig.5 angedeutet ist: Der Abzug 13 ist ein Rohr mit kleinem Durchmesser und ohne Verdrängerkörper 23. Zur Oberflächenvergrösserung können nicht dargestellte Rippen auf der Innen- und auch auf der Aussenseite des Rohres 13 vorgesehen sein.

Damit für alle Brennstoffzellen 10 des Stapels 1 gleiche Betriebsbedingungen gelten, muss die durch die radialen Kanäle 36 tretende Luft überall mit gleicher Temperatur der Heizfläche 25 zuströmen. Diese Forderung lässt sich erfüllen, wenn der Spalt 35 zwischen den beiden Mantelstücken 21 und 22 dem Temperaturfeld in der Hülle 2 entsprechend solcherart angeordnet wird, dass die Temperatur der Luft, die dem Spalt 35 zugeführte wird, im wesentlichen gleich gross ist wie die mittlere Temperatur der Hülle 2 am Spalt 35. Da ein radialer Wärmefluss in der Hülle 2 herrscht, ist die Temperatur an der am Spalt 35 liegenden Oberfläche des Mantelstücks 22 rund 10 K grösser als die Lufttemperatur, während die gegenüberliegende Oberfläche des Mantelstücks 21 eine entsprechend tiefere Temperatur aufweist. Bei dieser Anordnung des Spaltes 35 verändert sich die Temperatur der Luft beim Transport zu den einzelnen Kanälen 36 des Mantelstücks 22 nicht und somit tritt die Luft überall mit gleicher Temperatur in diese Kanäle 36 ein.

Die radialen Luftkanäle mit beispielsweise kreisförmigem Querschnitt, die mit Vorteil alle den gleichen Durchmesser aufweisen, sind in axialen Reihen 36′ (siehe Fig.4) angeordnet. Auch die Luftzufuhrleitungen 12 (Fig.3), welche die Verbindung zwischen den axialen Kanälen 37 und den Brennstoffzellen herstellen, sind ebenfalls in axialen Reihen ausgerichtet, wobei diese Reihen gegenüber den Reihen 36′ versetzt angeordnet sind und zwar so, dass die Reihe 36′ auf der einen Seite des axialen Kanals 37 und die Reihe der Luftzufuhrleitungen 12 auf der anderen Seite desselben Kanals 37 angeordnet sind. Dadurch ergibt sich eine maximale Verweilzeit der Luft an der Heizfläche 25. Jedem Luftkanal 36 sind die Luftzufuhrleitungen 12 jeweils einer Gruppe von Brennstoffzellen 10 zugeordnet. Dabei ist die Anzahl der Zellen pro Gruppe jeweils gleich gross, beispielsweise 5.

Die Temperatur der Luft, die über die Leitungen 12 den Brennstoffzellen 10 zugeführt wird, ist in beschränktem Masse steuerbar, wenn das zweite Mantelstück 22 drehbar ausgebildet wird. Durch Drehung der radialen Kanäle 36 gegen die zugeordneten Luftzufuhrleitungen 12 kann die Verweilzeit der Luft im axialen Kanal 37 und damit die Wärmeaufnahme verringert werden. Beispielsweise kann die Bodenisolation 26 zweiteilig mit einem um die Stapelachse drehbar ausgebildeten Teil 26a ausgeführt werden, wobei dieses Teil 26a mit dem zweiten Mantelstück 22 in fester Verbindung stehen soll. Das Mantelstück 22 soll dabei mit der radialen Wand 24a nur in berührendem Kontakt stehen, sodass eine Drehbewegung gegenüber dieser stationären Wand möglich ist. Die Drehbewegung kann beispielsweise mit einer Friktionsrolle 27 und einem Antrieb 28, die an der Unterseite der Bodenisolation 26a angeordnet sind (siehe Fig.2), ausgeführt werden.

Die wärmedämmenden Teile (21, 22, 26) der Hülle werden mit Vorteil auf eine vom Ofenbau her bekannte Art aus einer keramischen Masse gefertigt. Die äussere Schicht 20 der Hülle kann mit zusätzlichen wärmedämmenden Lagen 201, 202 und 203 (siehe Fig.4) ausgestattet werden, die entsprechend der Temperatur der sich erwärmenden Luft verschieden dick ausgebildet sind. Der erste Hohlraum 31, 32 kann durch Hinzunahme eines radialen Spaltraums 31a bei der Bodenplatte 20b erweitert werden. In diesem Fall befindet sich der Luftzufuhrstutzen 30 im mittleren Bereich des Hüllenbodens. Wie in Fig.5 gezeigt ist, kann der Ringspaltkanal 31 mit einer zylinderförmigen Wand 20a in zwei prallele Teilräume 31c und 31d unterteilt werden. Die Luft 50 wird oben über einen ringförmigen Verteilkanal 31b dem Teilraum 31c zugeführt; sie tritt unten in den zweiten Teilraum 31d über. Mit dieser Unterteilung des äusseren Hüllenhohlraumes ergibt sich eine verbesserte Abschirmung des radialen Wärmestroms. Auch bei der Ausführungsform gemäss Fig.5 kann ein zusätzlicher Spaltraum 31a wie bei jener gemäss Fig.4 vorgesehen werden. In diesem Fall ist eine zweite, wie in Fig.4 an der Bodenplatte 20b angeordnete Luftzuführung 30 nötig.

Bei der Beschreibung der erfindungsgemässen Vorrichtung ist der Einfachheit halber beispielsweise von Bodenplatte oder Bodenisolation gesprochen worden. Tatsächlich lässt sich aber diese Vorrichtung bezüglich dem Schwerefeld beliebig orientieren. So kann auch beispielsweise die Achse der Vorrichtung horizontal gerichtet sein oder die Bodenplatte 20b kann oben, der Abzug 13 unten liegen.

Um die Wirkungsweise der erfindungsgemässen Vorrichtung hinsichtlich der Wärmedämmung durch deren Hülle zu veranschaulichen, werden nachfolgend die thermischen Verhältnisse für ein Beispiel beschrieben, das eine Versuchsvorrichtung betrifft:

Der Stapel 1 umfasst 40 Zellen und weist eine Höhe von 40 cm auf. Die Hülle ist gemäss Fig.1 aufgebaut. Das elektrochemisch aktive Element der Brennstoffzelle 10 mit einem Durchmesser von 12 cm erzeugt einen elektrischen Strom von 30 A bei einer Spannung von 0.5 V; somit beträgt die durch die ganze Batterie erzeugte elektrische Leistung 600 W (alle Zahlen sind gerundet). Dabei wird Wasserstoff bei einem Massenstrom von 0.02 g/s als Brennstoff 40 verwendet. Für die Luft 50 wird ein Massenstrom von 2 g/s benötigt. Nur die Hälfte des Brennstoffs wird beim elektrochemischen Prozess genutzt. Das Abgas 60 tritt beim Abzug 13 mit einer Temperatur von 500°C aus. Der Wirkungsgrad bezüglich der elektrischen Leistung beträgt 20%.

Beim Durchströmen des äusseren Hüllenhohlraums 31, 32 erwärmt sich die Luft 50 von der Umgebungstemperatur auf 100°C. Im Abgaswärmetauscher nimmt die Temperatur der Luft um 300 K zu, sodass die Eintrittstemperatur bei den radialen Kanälen 36 des Mantelstücks 22 400°C beträgt. Beim Transport durch diese Kanäle 36 erhöht sich die Temperatur um weitere 100 K. Sodann wird die Luft durch die Heizfläche 25, deren Temperatur 800°C ist, auf 700°C aufgeheizt, und mit dieser Temperatur tritt die Luft schliesslich durch die Zufuhrleitungen 12 in die Brennstoffzellen ein. Die Luft hat beim Durchtritt durch die Hülle eine Erwärmung erfahren, die einer Heizleistung von 1500 W entspricht. Durch den Abgaswärmetauscher 24′ sind dabei rund 600 W aufgebracht worden; somit trägt das übrige Kanalsystem der Hülle 2 zur Erwärmung 900 W bei. Mit diesem Betrag ist die Wärmemenge gegeben, die pro Sekunde durch die Luft aus der Hülle zu den Brennstoffzellen zurückgeführt wird. Die dem Abgasstrom entsprechende Wärmeleistung beträgt rund 1200 W; gleich gross ist dabei der Wärmeverlust durch die Hüllenoberfläche. Indem die äussere Hüllenwand 20 mit Wärmedämmschichten (gemäss Fig.4) versehen wird, kann der Wärmeverlust weiter - beispielsweise auf 500 W - reduziert werden. Im Hinblick auf die kommerzielle Verwendung der Brennstoffzellen kann der Wirkungsgrad auf 50% gesteigert werden, wenn neben verschiedenen Verbesserungen dafür gesorgt wird, dass 85% des Brennstoffgases für den stromliefernden Prozess und nur 15% für die Nachverbrennung genutzt wird. In diesem Fall steht einer elektrischen Leistung von 1500 W beispielsweise eine thermische Abgasleistung von 900 W und ein Wärmeverlust von 600 W entgegen.

## Patentansprüche

1. Vorrichtung bestehend aus einem Stapel (1) von im wesentlichen zentralsymmetrischen Hochtemperatur-Brennstoffzellen (10), einer wärmedämmenden Hülle (2) und einem Nachverbrennungsraum (15) zwischen der zylindrischen Oberfläche des Zellenstapels (1) und der Hülle, wobei Luftzufuhrleitungen (12) zu den Brennstoffzellen an der zylindrischen Oberfläche des Zellenstapels angeordnet sind,
dadurch gekennzeichnet, dass die Hülle (2) mehrschichtig ausgebildet ist und ein Kanalsystem (31-37) für einen Luftstrom aufweist, dass zwischen einer äusseren Wand (20), die eine erste Schicht der Hülle bildet, und den inneren Teilen (21-26) der Hülle ein erster Hohlraum (31, 32) liegt, in welchem eine Kühlung der Hülle durch Luft (50) erfolgt, und dass das dem ersten Hohlraum anschliessende Kanalsystem (33-37) für eine weitere Erwärmung der Luft vorgesehen ist.

2. Vorrichtung nach Anspruch 1, dadurch gekennzeichnet, dass mindestens ein Luftzufuhrstutzen (30) an der äusseren Hüllenwand (20) vorgesehen ist und dass dieser oder diese Stutzen (30) und die Übergangsstellen vom ersten Hohlraum (31, 32) zum inneren Kanalsystem (33-37) solcherart angeordnet sind, dass die zugeführte Luft (50) als Wärmesenke für die radial nach aussen fliessende Wärme wirkt.

3. Vorrichtung nach einem der Ansprüche 1 oder 2, dadurch gekennzeichnet, dass ein Abzug (13) für die heissen Abgase (60) als Wärmetauscher (24′) in die Hülle (2) integriert ist, mittels welchem Abwärme an die im ersten Hohlraum (31, 32) vorgewärmten Luft übertragbar ist.

4. Vorrichtung nach Anspruch 3, dadurch gekennzeichnet, dass die inneren Teile der Hülle (2) durch ein erstes und ein zweites Mantelstück (21 bzw. 22) sowie eine Bodenisolation (26) gebildet sind, wobei das erste Mantelstück (21) und die Bodenisolation zusammen eine im wesentlichen luftundurchlässige zweite Schicht der Hülle bilden, das zweite Mantelstück (22), das innerhalb des ersten Mantelstücks und im Bereich des Nachverbrennungsraums (15) angeordnet ist, radiale Luftkanäle (36) aufweist und zwischen den beiden Mantelstücken ein Spalt (35) liegt, der mit der Austrittsstelle der Luftseite (33) des Abgaswärmetauschers (24) verbunden ist.

5. Vorrichtung nach Anspruch 4, dadurch gekennzeichnet, dass der Spalt (35) zwischen den beiden Mantelstücken (21, 22) dem Temperaturfeld in der Hülle (2) entsprechend solcherart angeordnet ist, dass die Temperatur der dem Spalt zugeführten Luft im wesentlichen gleich gross wie die mittlere Temperatur der Hülle am Spalt ist.

6. Vorrichtung nach Anspruch 4 oder 5, dadurch gekennzeichnet, dass zwischen dem Nachverbrennungsraum (15) und dem zweiten Mantelstück (22) eine Heizfläche (25) angeordnet ist, an der die durch die radialen Kanäle (36) zuströmende Luft im wesentlichen mit der bei der Verbrennung freigesetzten Wärme weiter aufgeheizt wird.

7. Vorrichtung nach Anspruch 6, dadurch gekennzeichnet, dass die Querschnittsflächen der radialen Luftkanäle (36) des zweiten Mantels (22) zumindest angenähert gleich gross sind und jedem Luftkanal (36) Luftzufuhrleitungen (12) jeweils einer Gruppe von Brennstoffzellen (10) zugeordnet sind, wobei die Anzahl der Zellen pro Gruppe jeweils gleich gross ist.

8. Vorrichtung nach Anspruch 6 oder 7, dadurch gekennzeichnet, dass die radialen Luftkanäle (36) und die Luftzufuhrleitungen (12) in axial ausgerichteten und gegen einander versetzten Reihen (36′) angeordnet sind und dass axiale Rippen (25a) auf der Heizfläche (25) den Luftraum in axiale Kanäle (37) unterteilen, wobei die radialen Luftkanäle (36) und die zugeordneten Luftzufuhrleitungen (12) mit demselben Kanal (37) in Verbindung stehen.

9. Vorrichtung nach Anspruch 8, dadurch gekennzeichnet, dass das zweite Mantelstück (22) um die Stapelachse drehbar ausgebildet ist.

10. Vorrichtung nach Anspruch 9, dadurch gekennzeichnet, dass die Bodenisolation (26) ein drehbar ausgebildetes Teil (26a) aufweist und dass dieses Teil mit dem zweiten Mantelstück (22) in fester Verbindung steht.

11. Vorrichtung nach einem der Ansprüche 1 bis 10, dadurch gekennzeichnet, dass die inneren Teile (21,22,23,26) der Hülle zumindest teilweise aus einer wärmedämmenden, keramischen Masse gefertigt sind.

12. Vorrichtung nach einem der Ansprüche 6 bis 11, dadurch gekennzeichnet, dass die wärmeübertragende Fläche (24) des Abgaswärmetauschers (24′) und die Heizfläche (25) des Nachverbrennungsraums (15) im wesentlichen zwei Teilstücke eines axialen Rohres sind.

## Claims

1. An equipment consisting of a stack (1) of essentially centro-symmetrical high-temperature fuel cells (10), a heat-insulating envelope (2) and an after-burning space (15) between the cylindrical surface of the stack (1) of cells and the envelope, whilst air supply lines (12) to the fuel cells are arranged on the cylindrical surface of the stack of cells, characterized in that
the envelope (2) is made multilayered and exhibits a system of channels (31-37) for a flow of air, that betwen an outer wall (20) forming a first layer of the envelope and the inner parts (21-26) of the envelope lies a first cavity (31, 32) in which a cooling of the envelope is effected by air (50), and that the system of channels (33-37) adjoining the first cavity is provided for further heating of the air.

2. An equipment as in Claim 1, characterized in that at least one air supply connection (30) is provided on the outer wall (20) of the envelope and that the said connection or connections (30) and the points of transition from the first cavity (31, 32) to the inner system (33-37) of channels is arranged in such a fashion that the air (50) supplied acts as a heatsink for the heat flowing radially outwards.

3. An equipment as in one of the Claims 1 or 2, characterized in that an exhaust (13) for the hot exhaust gases (60) is integrated into the envelope (2) as a heatexchanger (24′) by means of which exhaust heat may be transferred to the air preheated in the first cavity (31, 32).

4. An equipment as in Claim 3, characterized in that the inner parts of the envelope (2) are formed by first and second pieces of shell (21 resp. 22) as well as a bottom insulation (26), where the first piece of shell (21) and the bottom insulation form together a second layer of the envelope essentially impermeable to air, the second piece of shell (22) which is arranged inside the first piece of shell and in the region of the afterburning space (15), exhibits radial air-channels (36) and between the two pieces of shell lies a gap (35) which is connected to the outlet from the air side (33) of the exhaust gas heatexchanger (24).

5. An equipment as in Claim 4, characterized in that the gap (35) between the two pieces of shell (21, 22) is arranged to correspond with the temperature field in the envelope (2) in such a fashion that the temperature of the air fed to the gap is essentially equal to the average temperature of the envelope at the gap.

6. An equipment as in Claim 4 or 5, characterized in that between the afterburning space (15) and the second piece of shell (22) a hot face (25) is arranged, against which the air flowing in through the radial channels (36) is further heated essentially by the heat released during combustion.

7. An equipment as in Claim 6, characterized in that the areas of cross-section of the radial air channels (36) of the second shell (22) are at least approximately equal and with each air channel (36) are associated air supply lines (12) of a respective group of fuel cells (10), the number of cells being equal in every group.

8. An equipment as in Claim 6 or 7, characterized in that the radial air channels (36) and air supply lines (12) are arranged in axially aligned rows (36′) offset from one another and that axial ribs (25a) on the hot face (25) subdivide the air space into axial channels (37), the radial air channels (36) and associated air supply lines (12) being connected to the same channel (37).

9. An equipment as in Claim 8, characterized in that the second piece of shell (22) is made able to turn about the axis of the stack.

10. An equipment as in Claim 9, characterized in that the bottom insulation exhibits a part (26a) which is made able to turn and that the said part is solidly connected to the second piece of shell (22).

11. An equipment as in one of the Claims 1 to 10, characterized in that the inner parts (21, 22, 23 , 26) of the envelope are manufactured at least partially from a heat-insulating ceramic composition.

12. An equipment as in one of the Claims 6 to 11, characterized in that the heat-transmitting face (24) of the exhaust gas heatexchanger (24′ and the hot face (25) of the afterburning space (15) are essentially two portions of one axial tube.

## Revendications

1. Dispositif constitué d'un empilement (1) de piles à combustible à haute température (10) à symétrie sensiblement centrale, d'une gaine calorifuge (2) et d'une chambre de postcombustion (15) comprise entre la surface cylindrique de l'empilement (1) de piles et la gaine, des conduites d'alimentation en air (12) menant aux piles à combustible étant disposées sur la surface cylindrique de l'empilement de piles, caractérisé en ce que la gaine (2) comporte plusieurs couches et possède un système de canaux (31 à 37) destinés à un courant d'air, en ce que, entre une paroi extérieure (20) formant une première couche de la gaine et les éléments intérieurs (21 à 26) de la gaine, se trouve une première cavité (31, 32) dans laquelle la gaine est refroidie par de l'air (50), et en ce que le système de canaux (33 à 37) raccordé à la première cavité est prévu pour réchauffer l'air.

2. Dispositif selon la revendication 1, caractérisé en ce qu'au moins une tubulure d'alimentation en air (30) est prévue sur la paroi extérieure (20) de la gaine, et en ce que cette ou ces tubulures (30) et les points de transition entre la première cavité (31, 32) et le système intérieur de canaux (33 à 37) sont implantés de façon que l'air admis (50) fasse fonction de dissipateur thermique pour la chaleur circulant radialement vers l'extérieur.

3. Dispositif selon l'une des revendications 1 et 2, caractérisé en ce qu'une évacuation (13) pour les gaz perdus chauds (60) est intégrée dans la gaine (2) sous la forme d'un échangeur de chaleur (24′) et permet de transférer la chaleur perdue à l'air préchauffé dans la première cavité (31, 32).

4. Dispositif selon la revendication 3, caractérisé en ce que les éléments intérieurs de la gaine (2) sont constitués par une première et une seconde enveloppe (21 et 22) ainsi que par une isolation de fond (26), la première enveloppe (21) et l'isolation de fond formant ensemble une deuxième couche, sensiblement étanche à l'air, de la gaine, la seconde enveloppe (22) située à l'intérieur de la première enveloppe et dans la zone de la chambre de postcombustion (15) comportant des canaux d'air radiaux (36) et, entre les deux enveloppes, étant ménagé un interstice (35) qui communique avec la sortie du côté air (33) de l'échangeur de chaleur (24) des gaz perdus.

5. Dispositif selon la revendication 4, caractérisé en ce que l'interstice (35) compris entre les deux enveloppes (21, 22) est ménagé en fonction du domaine de températures régnant dans la gaine (2), de façon que la température de l'air envoyé dans l'interstice soit sensiblement égale à la température moyenne de la gaine au niveau de l'interstice.

6. Dispositif selon la revendication 4 ou 5, caractérisé en ce qu'il est prévu, entre la chambre de postcombustion (15) et la seconde enveloppe (22), une surface de chauffe (25), contre laquelle l'air traversant les canaux radiaux (36) continue d'être réchauffé pour l'essentiel par la chaleur dégagée lors de la combustion.

7. Dispositif selon la revendication 6, caractérisé en ce que les surfaces transversales des canaux d'air radiaux (36) de la seconde enveloppe (22) sont au moins approximativement égales, et à chaque canal d'air (36) sont associées les conduites d'alimentation en air (12) de chaque groupe de piles à combustible (10), le nombre des piles étant identique dans chacun des groupes.

8. Dispositif selon la revendication 6 ou 7, caractérisé en ce que les canaux d'air radiaux (36) et les conduites d'alimentation en air (12) sont disposés en rangées (36′) orientées axialement et décalées les unes par rapport aux autres, et en ce que des nervures axiales (25a) disposées sur la surface de chauffe (25) divisent la chambre de circulation d'air en canaux axiaux (37), les canaux d'air radiaux (36) et les conduites d'alimentation en air correspondantes (12) communiquant avec le même canal (37).

9. Dispositif selon la revendication 8, caractérisé en ce que la seconde enveloppe (22) est conçue avec une possibilité de rotation autour de l'axe de l'empilement.

10. Dispositif selon la revendication 9, caractérisé en ce que l'isolation de fond (26) comporte un élément tournant (26a) et en ce que cet élément est solidarisé à la seconde enveloppe (22).

11. Dispositif selon l'une des revendications 1 à 10, caractérisé en ce que les éléments intérieurs (21, 22, 23, 26) de la gaine sont réalisés au moins partiellement dans un matériau céramique calorifuge.

12. Dispositif selon l'une des revendications 6 à 11, caractérisé en ce que la surface caloporteuse (24) de l'échangeur de chaleur (24′) des gaz perdus et la surface de chauffe (25) de la chambre de postcombustion (15) constituent au moins deux segments d'un tube axial.
